# EUROPEAN PATENT SPECIFICATION

(11) **EP 3 002 603 B1**
(45) Date of publication and mention of the grant of the patent: **12.12.2018**
(21) Application number: 15188014.3
(22) Date of filing: 01.10.2015
(51) Int. Cl.: G01S 5/02, G01S 5/00

(54) **LOCATION SYSTEM**
ORTUNGSSYSTEM
SYSTÈME DE LOCALISATION

(30) Priority: 02.10.2014 GB 201417453
(43) Date of publication of application: 06.04.2016
(73) Proprietor: AeroScout Ltd, 7403635 Ness-Ziona (IL)
(72) Inventor: Mayorchik, Victor, 7852129 Ashkelon (IL); Aljadeff, Daniel, IL Kiriat Ono (IL)
(74) Representative: SBD IPAdmin

(56) References cited:
- WO-A1-00/08886
- US-A1- 2008 261 615
- US-A1- 2013 307 730

## Description

The present invention relates to location systems, especially to so-called real time locations systems (RTLS), in which mobile wireless devices such as tags, transponders and/or mobile communications devices are located, and preferably tracked, by means of wireless signal transmissions.

Such location systems are used for locating, and preferably tracking, articles and/or people associated with respective wireless devices. Location systems are used in a wide range of environments, including hospitals and other healthcare situations, social care environments, prisons, industrial locations, warehouses, retail stores, educational institutions, offices and logistics environments, for example. Such systems are used for locating and tracking patients (especially babies and the elderly) and other categories of people, and for locating and tracking medical supplies, equipment, products, tools and other categories of articles.

Location systems use one or more of a variety of wireless technologies, including: wireless local area network (WLAN) technologies; wireless personal area network (WPAN) technologies (including low-rate wireless personal area network (LR-WPAN) technologies); radio frequency identification (RFID); ultra-wideband (UWB); cellular; satellite (e.g. global positioning system (GPS)); ultrasound; sound; infrared; visible light; camera vision, etc. Included in WLAN technologies are those conforming to the Institute of Electrical and Electronics Engineers (IEEE) 802.11 series of standards (e.g. Wi-Fi (TM)). Included in WPAN and LR-WPAN technologies are those conforming to the IEEE 802.15 series of standards (e.g. Bluetooth (TM), ZigBee (TM), etc.).

The mobile wireless devices which are located and tracked in location systems may, for example, be tags, transponders or mobile communications devices, and they may be active and/or passive. For example, active mobile wireless devices may function as "beacons" which periodically emit wireless signals indicating their presence. Passive mobile wireless devices may, for example, function as transponders, only emitting wireless signals in response to wireless signals emitted by wireless emitters of the location system. Some mobile wireless devices may function sometimes as passive devices and at other times as active devices. Depending upon their functionality, the mobile wireless devices may be self-powered (e.g. battery powered) or may obtain their power from the wireless signals emitted by wireless emitters of the location system. Mobile communications devices used in location systems include, for example: mobile (e.g. cellular) telephones, including smart phones; portable computer devices, e.g. tablet computers, laptop computers, handheld computers, personal digital assistants (PDAs), GPS devices; etc.

As the skilled person knows, location systems use a variety of techniques for calculating the locations of mobile wireless devices. For example, some location systems use the times at which wireless transmissions from mobile wireless devices are received (i.e. time-of-arrival (TOA) information), in order to calculate differences in times-of-arrival between different wireless receivers and to use the calculated time-difference-of-arrival (TDOA) information to calculate the locations of the mobile wireless devices. Additionally or alternatively, location systems may use received signal strengths (e.g. received signal strength indication, RSSI), and/or angle of arrival (AOA) information, and/or round-trip time (RTT) information, radio map fingerprinting information, location information from nearby tags/transponders, satellite location information, etc. Additionally or alternatively, in some location systems the mobile wireless devices themselves perform at least part of the location calculations

A typical location system for locating mobile wireless devices comprises at least one wireless receiver (e.g. an access point) configured to receive wireless transmissions from the mobile wireless devices and to transmit (e.g. by wire or other physical conduit or wireless) bursts of device reports concerning the wireless transmissions to a report processor. Each wireless transmission from a mobile wireless device may comprise some or all of the following information, for example: the identity of the mobile wireless device; the time (e.g. "time stamp") of the wireless transmission; telemetry data (e.g. temperature, pressure, motion status, battery status, and/or other information concerning the mobile wireless device); location information (for those devices which calculate, and/or obtain, information regarding their own location). Each burst of device reports comprises a one or more reports (i.e. data messages) concerning one or more wireless transmissions from a particular mobile wireless device. The wireless transmissions may be transmitted by the mobile wireless device on a plurality of channels, for example. The device reports may comprise any or all of the information which may be included in the wireless transmissions received from the mobile wireless devices and/or may comprise information concerning the wireless receiver (e.g. the identity and/or location of the wireless receiver) and/or may comprise information concerning the wireless transmissions which may be used to calculate the location of the mobile wireless device (e.g. the time(s) of arrival of the wireless transmissions, the received signal strength (e.g. RSSI), the angle of arrival, round-trip time information, radio map fingerprinting information, location information from nearby tags/transponders, satellite location information, etc.). The report processor may, for example, be a so-called "location engine", i.e. a processor configured to receive the device reports and to use them to calculate the location of the mobile wireless device(s). The report processor may be configured to receive the bursts of device reports from the wireless receivers during burst reception time windows.

Another typical location system for locating mobile wireless devices comprises at least one wireless transmitter (e.g. an access point or other type of wireless transmitter) configured to transmit wireless transmissions (e.g. beacons) to be received by the mobile wireless devices. The wireless messages received by the mobile devices may be measured (e.g. TOA, RSSI, AOA) and the measurement results wirelessly transmitted to a report processor together with other information. Thus, each wireless transmission from a mobile wireless device may comprise some or all of the following information, for example: the identity of the mobile wireless device; the time (e.g. "time stamp") of the wireless transmission; telemetry data (e.g. temperature, pressure, motion status, battery status, and/or other information concerning the mobile wireless device); location information (for those devices which calculate, and/or obtain, information regarding their own location); information concerning the received wireless transmissions which may be used to calculate the location of the mobile wireless device (e.g. the time(s) of arrival of the wireless transmissions, the received signal strength (e.g. RSSI), the angle of arrival, round-trip time information, radio map fingerprinting information, location information from nearby tags/transponders, satellite location information, etc.). The mobile device wireless transmission sent to the report processor may be organized in bursts where each burst comprises one or more reports (i.e. data messages) concerning one or more wireless messages received from one or more beacon device. The wireless transmissions in a burst may be transmitted by the mobile device on a plurality of channels, for example.

The device reports may comprise any or all of the information which may be included in the wireless transmissions received from the wireless transmitter and/or may comprise information concerning the wireless transmitter (e.g. the identity and/or location of the wireless transmitter), the transmission power, the transmission channel, etc. The report processor may, for example, be a so-called "location engine", i.e. a processor configured to receive the device reports and to use them to calculate the location of the mobile wireless device(s). The report processor may be configured to receive the bursts of device reports from the wireless mobile device during burst reception time windows.

US 2008/0261615 A1 discloses a system for determining a geographical location of a portable communication device, in which a wireless access point receives a reverse link WWAN signal from a wireless communication device and forwards WLAN location information based on the received reverse link WWAN signal to a position determining entity. The position determining entity uses the WLAN location information to determine the geographical location of the wireless communication device.

There is a need to improve the speed, effectiveness and efficiency of location systems, so that mobile wireless devices (and therefore the articles and/or people with which they are associated) may be located, and preferably tracked, more quickly, effectively and efficiently. The present invention seeks to achieve this.

The present invention provides a location system in accordance with the claims. Consequently, it is to be understood that any or all of the above mentioned features may be a preferred or other optional feature of the present invention.

In a first aspect, the present invention provides a location system for locating mobile wireless devices, comprising: at least one mobile wireless device; at least one wireless receiver configured to receive wireless transmissions from the at least one mobile wireless device and to transmit bursts of device reports concerning the wireless transmissions to a report processor; and said report processor configured to receive the bursts of device reports from the at least one wireless receiver, each burst of device reports to be received by the report processor during a respective burst reception time window; characterised in that the report processor is configured to vary the duration of the burst reception time window during use, in dependence at least upon: (i) a determination of a type of burst of device reports; and/or (ii) a measured duration of a previous burst of device reports.

The invention therefore provides a location system in which the duration of the burst reception time window, during which bursts of device reports from the wireless receiver(s) are received by the report processor (which may be a location engine, for example), is varied by the report processor during use, according to specific factors. Consequently, the invention provides the advantage of enabling the location system to be dynamic and/or adaptive with regard to the handling of bursts of device reports transmitted by the wireless receiver(s) concerning received wireless transmissions. In particular, the location system, and especially the report processor, may be configured to dynamically/adaptively balance (on the one hand) the need for sufficiently long duration burst reception time windows such that sufficient information is received in order to locate the mobile wireless device(s) accurately, and (on the other hand) the need for sufficiently short duration burst reception time windows such that processing speed and processing load are not so great as to compromise the speed with which the, or each, mobile wireless device is located.

The report processor of the location system preferably is configured to determine the type of burst of device reports after at least the first device report of a burst is received. Preferably, the report
processor is configured to determine the type of burst of device reports from data coding contained in at least one device report of the burst, e.g. at least the first received device report of the burst. For example, data coding contained in at least one of the device reports of the burst may provide any or all of the following types of information which may enable the report processor to determine the type of burst of device reports being received: (i) the burst length duration; and/or (ii) the number of repetitions in the burst; and/or (iii) the type(s) and/or configuration(s) of mobile wireless device(s); and/or (iv) the type and/or configuration of wireless receiver.

The type of burst of device reports may, for example, be a normal (e.g. normal duration) burst type or long burst type, e.g. an emergency burst type (for example containing a larger number of device report repetitions than a normal burst type). An emergency burst may be transmitted when, for example, a panic button associated with the mobile wireless device is pressed, or a tamper switch is activated. In those (and other) cases, a greater number of repetitions is transmitted by the mobile wireless device, and thus also in the burst of device reports, in order to: (i) increase the probability that the transmitted messages are received by at least one receiver; and/or (ii) improve the location accuracy by using more measurements to locate the mobile wireless device. A normal burst is generally a periodic transmission and therefore generally regarded as less important than those unsolicited transmissions which may be originated by an emergency or other special condition.

In preferred implementations of the invention, the report processor is configured to measure the duration of a previous burst of device reports. Preferably, the measured duration of a previous burst of device reports is the measured duration of a previous burst of device reports from the same mobile wireless device. Advantageously, the previous burst of device reports may be the immediately preceding burst of device reports, e.g. the immediately preceding burst of device reports from the same mobile wireless device. Preferably, therefore, the variation in the duration of the burst reception time window is a variation in the duration of the burst reception time window for a particular mobile wireless device.

In especially preferred implementations of the invention, the report processor is configured to vary the duration of the burst reception time window in dependence upon a measured duration of a previous burst of device reports multiplied by a coefficient. Preferably, the report processor is configured to select a value for the coefficient from a plurality of predetermined coefficient values. Advantageously, the report processor may be configured to select a value for the coefficient in dependence upon the determined type of burst of device reports. For example, a coefficient for an emergency type of burst of device reports may be greater than a coefficient for a normal type of burst of device reports, because an emergency burst generally has a longer duration than does a normal burst.

In at least some implementations of the invention, the report processor is configured to vary the duration of the burst reception time window also in dependence upon: (a) at least one human user-defined parameter; and/or (b) at least one characteristic of the location system. The, or each, human user-defined parameter may, for example, be a tolerance parameter input by a user of the location system, according to requirements. The, or each, characteristic of the location system may, for example, comprise a latency time delay in: signal and/or report transmission; and/or signal and/or report reception; and/or signal and/or report processing; and/or computation.

Preferably, the report processor is configured to vary the duration of the burst reception time window in a time range between predetermined maximum and minimum durations.

The report processor preferably is configured, for the first received burst of device reports from a particular mobile wireless device, to set the duration of the burst reception time window to a predetermined default duration, preferably after at least the first device report of the first burst is received. Advantageously, the report processor may be configured to modify the predetermined default duration at least in dependence upon: (a) at least one human user-defined parameter (e.g. as referred to above); and/or (b) at least one characteristic of the location system (e.g. as referred to above).

The report processor and at least one wireless receiver may, in at least some implementations of the invention, comprise a single physical apparatus, but preferably the report processor is physically separate from the wireless receiver(s) but communicatively linked thereto, for example by means of one or more physical or wireless communications link(s) (e.g. one or more Ethernet or other cable(s) or wireless link).

In particularly preferred implementations of the invention, the report processor is configured to collect, preferably to parse, the received device reports of each burst for a particular mobile wireless device for use in calculating the location of the mobile wireless device. Advantageously, the report processor is configured to use the collected device reports to calculate the location of the mobile wireless device, e.g. the report processor is the, or a, location engine of the location system.

In preferred implementations of the invention, the mobile wireless device(s) may include, in one or more transmitted messages, and/or the wireless receiver may include, in one or more of the device reports, information which may be subsequently decoded by the report processor in order to adjust the burst reception time window.

In one implementation of the present invention, the mobile wireless device(s) may transmit, in one or more messages, and/or the wireless receiver may transmit, in each device report, the amount of time required to complete the transmission of the complete burst. That way, the report processor knows from the reception of each device report within the burst, how much time remains for the wireless receiver to complete the transmission of the whole burst.

In another implementation, the report processor may add to the time reported by the mobile wireless device and/or the wireless receiver, an additional time to accommodate delays (e.g. 0.5-2sec) which can be originated by the network, the receiver(s) or the communication controller(s).

In another implementation, the size (duration) of the collection window (burst reception time window) may be determined by the type of the mobile wireless device and/or wireless receiver. Thus, the report processor may use longer collection windows according to the category, usage, group or classification of the mobile wireless device and/or wireless receiver.

In other implementations, the size (duration) of the collection window (burst reception time window) may be determined by different parameters in the report processor, e.g. any or all of the following:
1. Specified location accuracy: The report processor may collect more reports (longer collection time) for wireless mobile devices requiring higher accuracy. The location accuracy may depend upon the mobile wireless device type or category, the time of day, the area in which the mobile wireless device is located (e.g. estimated in accordance with the first received report in a burst), a user request, etc.
2. System load: The report processor may use shorter collection times when the system load is high (i.e. thus reducing the processing load) since less reports are processed by the report processor.
3. System throughput: The report processor may use shorter collection times when the system throughput should be higher (i.e. less reports are processed by the report processor).
4. Specified latency: The report processor may use shorter collection times when the required latency for a specific or a group of mobile wireless devices should be shorter (i.e. collecting more messages increases the processing latency). The specified latency may depend upon the mobile wireless device type or category, the time of day, the area in which the mobile wireless device is located (e.g. estimated in accordance with the first received report in a burst), a user request, etc.
5. License type: The report processor may use shorter or longer collection times depending on the type of the software license provided to a specific customer. More expensive licenses may provide higher system performance by using longer collection times.

In at least some implementations of the invention, the at least one wireless receiver includes a communications controller which is configured to transmit the bursts of device reports concerning the wireless transmissions to the report processor. The communications controller and the wireless receiver may comprise a single physical apparatus, or alternatively the communications controller may be physically separate from the wireless receiver but communicatively linked thereto, for example by means of a physical communications link (e.g. one or more Ethernet cable(s) or other cable(s)) or by a wireless communication link.

The, or each, mobile wireless device preferably comprises a tag, a transponder or a mobile communications device. The mobile wireless device may be either passive or active, for example. The location system according to the invention preferably includes a plurality of the mobile wireless devices and/or a plurality of the wireless receivers.

It is to be understood that any feature, including any preferred feature, of any aspect of the invention may be a feature, including a preferred feature, of any other aspect of the invention.

Preferred embodiments of the invention will now be described, by way of example, with reference to the accompanying drawings, of which:
Figure 1 is a schematic diagram of an implementation of a location system according to the invention; and
Figure 2 is a flow diagram of an implementation of the method of locating at least one mobile wireless device by means of a location system according to the invention.

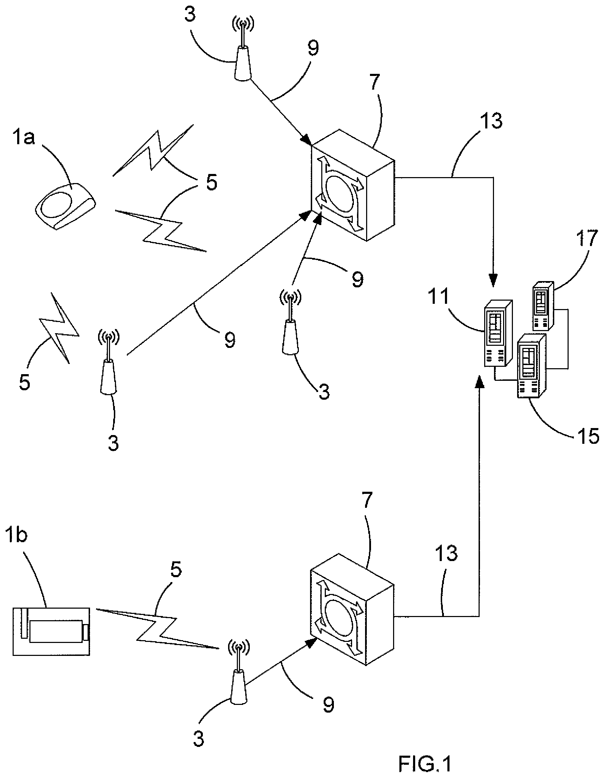

As shown in Figure 1, an exemplary implementation of a location system according to the invention includes at least one mobile wireless device, as represented by an active mobile wireless device 1a and a passive mobile wireless device 1b. As described above, the (or each) mobile wireless device may, for example, be a tag, a transponder or a mobile communications device, and it may be active and/or passive. For example, suitable active mobile wireless devices may function as "beacons" which periodically emit wireless signals indicating their presence. Suitable passive mobile wireless devices may, for example, function as transponders, only emitting wireless signals in response to wireless signals emitted by wireless emitters of the location system. Some suitable mobile wireless devices may function sometimes as passive devices and at other times as active devices. Depending upon functionality, the mobile wireless device(s) may be self-powered (e.g. battery powered) or may obtain power from the wireless signals emitted by wireless emitters of the location system. Suitable mobile communications devices include, for example: mobile (e.g. cellular) telephones, including smart phones; portable computer devices, e.g. tablet computers, laptop computers, handheld computers, personal digital assistants (PDAs), GPS devices; etc. Figure 1 shows an active "beaconing" tag 1a and a passive tag 1b.

The example location system shown in Figure 1 also includes a plurality of wireless receivers 3 located spaced-apart from each other in the environment in which the location system is operating. Each wireless receiver 3 is configured to receive wireless transmissions 5 from the mobile wireless device(s) (as represented by mobile wireless devices 1a and 1b) which are being located and tracked. Each wireless transmission 5 from a mobile wireless device 1a, 1b may comprise some or all of the following information, for example: the identity of the mobile wireless device; the time (e.g. "time stamp") of the wireless transmission; telemetry data (e.g. temperature, pressure, motion status, battery status, and/or other information concerning the mobile wireless device); location information (for those devices which calculate, and/or obtain, information regarding their own location). As indicated above, the location system according to the invention may use one or more of a variety of wireless and positioning technologies, including: wireless local area network (WLAN) technologies; wireless personal area network (WPAN) technologies (including low-rate wireless personal area network (LR-WPAN) technologies); radio frequency identification (RFID); ultra-wideband (UWB); cellular; satellite (e.g. global positioning system (GPS)); ultrasound; sound; infrared; visible light; camera vision, etc. Included in suitable WLAN technologies are those conforming to the Institute of Electrical and Electronics Engineers (IEEE) 802.11 series of standards (e.g. Wi-Fi (TM)). Included in suitable WPAN and LR-WPAN technologies are those conforming to the IEEE 802.15 series of standards (e.g. Bluetooth (TM), ZigBee (TM), etc.). Figure 1 shows a WLAN arrangement, preferably Wi-Fi (TM).

Figure 1 also shows the wireless receivers 3 connected to optional communications controllers 7. The (or each) communications controller 7 (if present) may comprise a single physical apparatus which includes a respective wireless receiver 3, but preferably the (or each) communications controller 7 (if present) is physically separate from the wireless receivers but communicatively linked thereto, for example by means of a physical communications link 9 (e.g. one or more Ethernet cable(s) or other cable(s)).

Each wireless receiver 3, optionally via an integral or separate communications controller 7, is configured to transmit bursts of device reports concerning the wireless transmissions 5 to a report processor 11. The report processor 11 is physically separate from the wireless receivers 3 (and any optional communications controller(s) 7) but communicatively linked thereto, for example by means of a physical communications link 13 (e.g. one or more Ethernet cable(s) or other cable(s)). However, in at least some implementations of the invention, the report processor 11 may comprise a single physical apparatus which includes a wireless receiver 3 and/or a communications controller 7.

Each burst of device reports transmitted by a wireless receiver 3 (optionally by means of a communications controller 7) comprises a plurality of reports (i.e. data messages) concerning one or more wireless transmissions 5 from a particular mobile wireless device 1a, 1b. The device reports of a burst may be transmitted on a plurality of channels, for example. The device reports may comprise any or all of the information which may be included in the wireless transmissions 5 received from the mobile wireless devices and/or may comprise information concerning the wireless receiver 3 (e.g. the identity and/or location of the wireless receiver 3) and/or may comprise information concerning the wireless transmissions 5 which may be used to calculate the location of the mobile wireless device 1a, 1b (e.g. the time(s) of arrival of the wireless transmissions, the received signal strength (e.g. RSSI), the angle of arrival, round-trip time information, radio map fingerprinting information, location information from nearby tags/transponders, satellite location information, etc.).

The report processor 11 may, for example, be a so-called "location engine", i.e. a processor (e.g. a server) configured to receive the device reports and to use them to calculate the location of the mobile wireless device(s) 1a, 1b. Alternatively, there may be a physically separate apparatus 15 comprising a location engine, and optionally one or more other processor(s) 17 (e.g. server(s)), for example running software applications such as location and tracking information presenting software and/or database(s). The report processor 11 of the location system is configured to receive the bursts of device reports from the wireless receivers 3 during burst reception time windows.

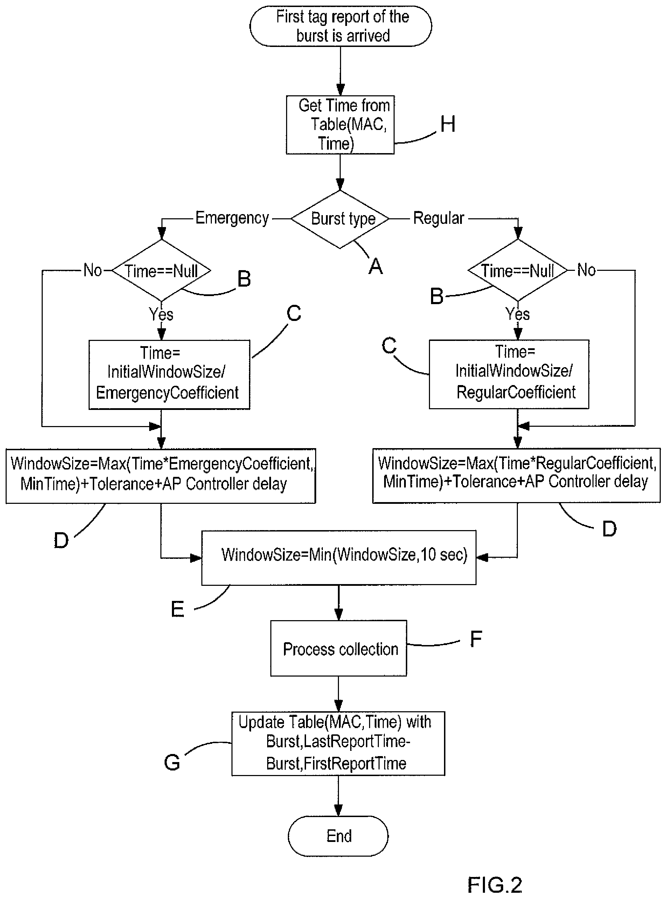

Figure 2 is a flow diagram of an exemplary implementation of the method of locating at least one mobile wireless device 1a, 1b by means of a location system according to the invention. The report processor 11 is configured to vary the duration of the burst reception time window for each mobile wireless device 1a, 1b during use, in dependence upon (*inter alia,* as described below and illustrated): (i) a determination of a type of burst of device reports; and (ii) a measured duration of a previous burst of device reports.

Box A of Figure 2 represents the determination (decision), by the report processor 11, of the type of burst of device reports ("Burst type") currently being received by the report processor after at least the first report of a burst of device reports is received concerning a particular mobile wireless device 1a, 1b. The burst type is determined by the report processor based upon data coding contained in at least one device report of the burst. For example, the TLV (i.e. type-length-value) coding of a device report may include an indication of the type of burst. In particular, the "event group" TLV coding of a device report of an emergency burst may be transmitted with an increased number of repetitions compared to a normal (i.e. "regular") burst, and the report processor 11 may detect the increased number of repetitions and therefore determine that the burst type is an emergency burst type. Consequently, the flow diagram of Figure 2 splits into two branches from Box A, with the right hand branch (as illustrated) corresponding to a determination by the report processor 11 that a burst of device reports being received is a normal (regular) burst, and the left hand branch corresponding to a determination that the burst is an emergency burst. Subsequent boxes B, C and D of the flow diagram therefore appear twice, one in each branch of the flow diagram.

Box B of Figure 2 is another decision box, and represents the determination by the report processor 11 as to whether or not the report processor has a record of a measured duration of a previous burst of device reports ("Time") for the particular mobile wireless device which the current burst of device reports concerns. If the report processor 11 has a record of a measured duration of a previous burst of device reports concerning this mobile wireless device (meaning that this is not the first received burst concerning this particular mobile wireless device), then a stored item termed "Time" (in the flow diagram) will have a value, and the method/process being performed by the report processor proceeds to Box D of the flow diagram. Alternatively, if "Time" has no value, i.e. the value for "Time" is null ("Time == Null"), then the report processor has no record of a measured duration of a previous burst of device reports concerning this particular mobile wireless device (meaning that this is the first received burst concerning this particular mobile wireless device). In this case, the method/process being performed by the report processor proceeds to Box C of the flow diagram.

Box C of Figure 2 represents the report processor 11 allocating a default duration for the burst ("Time") currently being received (i.e. the first burst of device reports received from a particular mobile wireless device). This comprises dividing a default initial value for the burst reception time window "InitialWindowSize" (for example a value of several seconds, e.g. 5 seconds) by a predetermined coefficient, i.e. "InitialWindowSize / RegularCoefficient" or "InitialWindowSize / EmergencyCoefficient". The value of the predetermined coefficient depends upon whether the burst of device reports has been determined (in Box A) to be a normal ("regular") burst (in which case the predetermined value for "RegularCoefficient" is used) or an emergency burst (in which case the predetermined value for "EmergencyCoefficient" is used). Typically, the predetermined coefficient for an emergency burst is greater than that for a normal burst (e.g. a value of 2.0 compared to a value of 1.5). The predetermined coefficients are chosen in advance for the location system, preferably based upon a statistical analysis of burst durations for the location system, which the skilled person will be able to carry out by trial-and-error. The purpose of dividing the default initial burst reception time window ("InitialWindowSize") by the relevant predetermined coefficient is so that after the subsequent method/process step (Box D) the duration of the burst reception time window ("WindowSize") for the first burst received from this mobile wireless device depends upon the default initial burst reception time window ("InitialWindowSize") and is not varied by a predetermined coefficient ("RegularCoefficient" or "EmergencyCoefficient") .

In another embodiment of the present invention, more than two coefficients are used in order to classify more than two types of messages from the mobile wireless device. In one implementation of the system different coefficients may be given to the following message types:
1. Normal periodic message (used to locate the mobile wireless device)
2. Emergency message (requiring location of the device)
3. Telemetry message (requiring location of the device)
4. Telemetry message (not requiring location of the device)
5. Messages triggered by exciters

Box D of Figure 2 represents a first step of the report processor 11 setting the burst reception time window ("WindowSize") for the burst of device reports currently being received. This step comprises (at least in part) multiplying the "Time" value by the relevant coefficient (i.e. "Time*RegularCoefficient" or "Time*EmergencyCoefficient") and selecting whichever value is the maximum between: (i) the resultant of that multiplication; or (ii) a predetermined default minimum value ("MinTime"); i.e. "Max(Time*[Regular or Emergency]Coefficient, MinTime)". Optionally, this first step may also comprise adding at least one human user-defined parameter ("Tolerance") which may, for example, be a tolerance parameter input by a user of the location system, e.g. via a graphical user interface (GUI) or application interface (API). Additionally or alternatively, this first step may optionally comprise adding a parameter representing at least one characteristic of the location system ("AP Controller delay") which may, for example, be a parameter representing a latency time delay in: signal and/or report transmission; and/or signal and/or report reception; and/or signal and/or report processing; and/or computation. For example "AP Controller delay" may be a parameter representing a latency time delay of a communications controller of the location system. "AP Controller delay" refers to "Access Point Controller delay", meaning a particular category of communications controller delay, but the parameter and the method/process/system are applicable generally.

Box E of Figure 2 represents a second step of the report processor 11 setting the burst reception time window ("WindowSize") for the burst of device reports currently being received. In this second step, the report processor 11 ensures that the duration of the burst reception time window ("WindowSize"), as set for the burst of device reports currently being received, is no greater than a predetermined duration (e.g. 10 seconds, but any suitable maximum duration may be predetermined). This is represented by "WindowSize = Min(WindowSize, 10 sec)", i.e. WindowSize is set to be whichever value is the minimum between: (i) WindowSize (as set in Box D); or (ii) 10 seconds (or another suitable maximum duration).

Box F of Figure 2 ("Process collection") represents the report processor 11 collecting, preferably parsing, the received device reports of each burst for a particular mobile wireless device, for use in calculating the location of the mobile wireless device. In some implementations of the invention, the report processor optionally is itself configured to use the collected device reports to calculate the location of the mobile wireless device, e.g. the report processor is the, or a, location engine of the location system. In other implementations of the invention, the report processor transmits the collected device reports to a separate location engine, for example, to calculate the location of the mobile wireless device.

Box G of Figure 2 represents the report processor 11 updating the value "Time" with the measured duration of this entire burst of device reports for this mobile wireless device, by subtracting the time at which the report processor received the first device report of the burst from the time at which the report processor received the last device report of the burst. This is represented by "Update Table(MAC, Time) with Burst.LastReportTime - Burst.FirstReportTime", where "MAC" means "MAC Address" (i.e. Medium Access Control Address) and refers to the identity of the particular mobile wireless device.

This method/process of the report processor 11 then ends, as indicated by the subsequent and final box of the flow diagram, namely "End". The next burst of device reports begins the method/process again, as indicated by the first box of the flow diagram, namely "First tag report of the burst is arrived". The second box of the flow diagram, i.e. Box H of Figure 2, represents the report processor 11 retrieving the saved value (if there is one) of "Time" for the particular mobile wireless device concerning which a new burst of device reports is now being received. The value "Time" (if there is one) is the measured duration of the immediately preceding burst of device reports received by the report processor concerning the mobile wireless device for which the new burst of device reports is now being received.

The method/process illustrated in the flow diagram of Figure 2 and described above thus comprises an example preferred implementation of the location system, method and report processor of the invention, whereby the report processor varies the duration of the device report burst reception time window during use, in dependence at least upon: (i) a determination of a type of burst of device reports; and (ii) a measured duration of a previous burst of device reports.

It will be understood that the above description and the drawings are examples of particular implementations of the invention, but that other implementations of the invention are included in the scope of the claims.

## Claims

1. A location system for locating mobile wireless devices (1), comprising: at least one mobile wireless device (1); at least one wireless receiver (3) configured to receive wireless transmissions (5) from the at least one mobile wireless device (1) and to transmit bursts of device reports concerning the wireless transmissions (5) to a report processor (11); and said report processor (11) configured to receive the bursts of device reports from the at least one wireless receiver (3), each burst of device reports to be received by the report processor (11) during a respective burst reception time window; **characterised in that** the report processor (11) is configured to vary the duration of the burst reception time window during use, in dependence at least upon: (i) a determination of a type of burst of device reports; and/or (ii) a measured duration of a previous burst of device reports.

2. A location system according to Claim 1, wherein the report processor (11) is configured to determine the type of burst of device reports after at least the first device report of a burst is received.

3. A location system according to Claim 1 or Claim 2, wherein the report processor (11) is configured to determine the type of burst of device reports from data coding contained in at least one device report of the burst.

4. A location system according to Claim 3, wherein the data coding contained in at least one device report of the burst provides information concerning: the burst length duration; and/or the number of repetitions in the burst; and/or the type and/or configuration of the mobile wireless device (1); and/or the type and/or configuration of the wireless receiver (3).

5. A location system according to any preceding claim, wherein the type of burst of device reports may be a normal burst type, or a long or emergency burst type.

6. A location system according to any preceding claim, wherein the report processor (11) is configured to measure said duration of a said previous burst of device reports.

7. A location system according to any preceding claim, wherein said measured duration of a said previous burst of device reports is the measured duration of a previous burst of device reports from the same mobile wireless device (1).

8. A location system according to any preceding claim, wherein the previous burst of device reports is the immediately preceding burst of device reports.

9. A location system according to any preceding claim, wherein the variation in the duration of the burst reception time window is a variation in the duration of the burst reception time window for a particular mobile wireless device (1).

10. A location system according to any preceding claim, wherein the report processor (11) is configured to vary the duration of the burst reception time window in dependence upon a said measured duration of a previous burst of device reports multiplied by a coefficient.

11. A location system according to Claim 10, wherein the report processor (11) is configured to select a value for the coefficient from a plurality of predetermined coefficient values.

12. A location system according to Claim 10 or Claim 11, wherein the report processor (11) is configured to select a value for the coefficient in dependence upon the determined type of burst of device reports.

13. A location system according to Claim 12, wherein a said coefficient for an emergency type of burst of device reports is greater than a coefficient for a normal type of burst of device reports.

14. A location system according to any preceding claim, wherein the report processor (11) is configured to vary the duration of the burst reception time window also in dependence upon: (a) at least one human user-defined parameter; and/or (b) at least one characteristic of the location system.

15. A location system according to Claim 14, wherein said at least one human user-defined parameter is a tolerance parameter input by a user of the location system; and/or wherein said at least one characteristic of the location system comprises a latency time delay in: signal and/or report transmission; and/or signal and/or report reception; and/or signal and/or report processing; and/or computation; and/or wherein said at least one characteristic of the location system comprises: a specified location accuracy requirement; and/or a current processing and/or transmission load of the system; and/or a specified system throughput requirement; and/or a specified software license requirement.

## Patentansprüche

1. Ortungssystem zum Orten von mobilen drahtlosen Vorrichtungen (1), umfassend: mindestens eine mobile drahtlose Vorrichtung (1); mindestens einen drahtlosen Empfänger (3), der konfiguriert ist, um drahtlose Übertragungen (5) von der mindestens einen mobilen drahtlosen Vorrichtung (1) zu empfangen und um Bursts von Geräteberichten über die drahtlosen Übertragungen (5) an einen Berichtsprozessor (11) zu übertragen; und wobei der Berichtsprozessor (11) konfiguriert ist, um die Bursts von Vorrichtungsberichten von dem mindestens einen drahtlosen Empfänger (3) zu empfangen, wobei jeder Burst von Vorrichtungsberichten während eines jeweiligen Burst-Empfangszeitfensters vom Berichtsprozessor (11) empfangen werden soll; **dadurch gekennzeichnet, dass** der Berichtsprozessor (11) konfiguriert ist, um die Dauer des Burst-Empfangszeitfensters während der Verwendung in Abhängigkeit von mindestens folgenden Faktoren zu variieren: (i) einer Bestimmung einer Art von Burst von Vorrichtungsberichten; und/oder (ii) einer gemessenen Dauer eines vorherigen Bursts von Vorrichtungsberichten.

2. Ortungssystem nach Anspruch 1, wobei der Berichtsprozessor (11) konfiguriert ist, um die Art des Bursts von Vorrichtungsberichten zu bestimmen, nachdem mindestens der erste Vorrichtungsbericht eines Bursts empfangen wurde.

3. Ortungssystem nach Anspruch 1 oder Anspruch 2, wobei der Berichtsprozessor (11) konfiguriert ist, um die Art des Bursts von Vorrichtungsberichten aus der Datencodierung zu bestimmen, die in mindestens einem Vorrichtungsbericht des Bursts enthalten ist.

4. Ortungssystem nach Anspruch 3, wobei die in mindestens einem Vorrichtungsbericht des Bursts enthaltene Datencodierung Informationen liefert über: die Dauer der Burst-Länge; und/oder die Anzahl der Wiederholungen im Burst; und/oder den Typ und/oder die Konfiguration der mobilen drahtlosen Vorrichtung (1); und/oder den Typ und/oder die Konfiguration des drahtlosen Empfängers (3).

5. Ortungssystem nach einem der vorstehenden Ansprüche, wobei die Art des Bursts von Vorrichtungsberichten eine normale Burstart oder eine lange oder Notfall-Burstart sein kann.

6. Ortungssystem nach einem der vorstehenden Ansprüche, wobei der Berichtsprozessor (11) konfiguriert ist, um die Dauer eines vorherigen Bursts von Vorrichtungsberichten zu messen.

7. Ortungssystem nach einem der vorstehenden Ansprüche, wobei die gemessene Dauer eines vorherigen Bursts von Vorrichtungsberichten die gemessene Dauer eines vorherigen Bursts von Vorrichtungsberichten von derselben mobilen drahtlosen Vorrichtung (1) ist.

8. Ortungssystem nach einem der vorstehenden Ansprüche, wobei der vorherige Burst von Vorrichtungsberichten der unmittelbar vorhergehende Burst von Vorrichtungsberichten ist.

9. Ortungssystem nach einem der vorstehenden Ansprüche, wobei die Änderung der Dauer des Burst-Empfangszeitfensters eine Variation der Dauer des Burst-Empfangszeitfensters für eine bestimmte mobile drahtlose Vorrichtung (1) ist.

10. Ortungssystem nach einem der vorstehenden Ansprüche, wobei der Berichtsprozessor (11) konfiguriert ist, um die Dauer des Burst-Empfangszeitfensters in Abhängigkeit von einer gemessenen Dauer eines vorherigen Bursts von Vorrichtungsberichten, multipliziert mit einem Koeffizienten, zu variieren.

11. Ortungssystem nach Anspruch 10, wobei der Berichtsprozessor (11) konfiguriert ist, um einen Wert für den Koeffizienten aus einer Vielzahl von vorbestimmten Koeffizientenwerten auszuwählen.

12. Ortungssystem nach Anspruch 10 oder Anspruch 11, wobei der Berichtsprozessor (11) konfiguriert ist, um einen Wert für den Koeffizienten in Abhängigkeit von der bestimmten Art des Bursts von Geräteberichten auszuwählen.

13. Ortungssystem nach Anspruch 12, wobei ein Koeffizient für eine Notfall-Burstart von Vorrichtungsberichten größer ist als ein Koeffizient für eine normale Burstart von Vorrichtungsberichten.

14. Ortungssystem nach einem der vorstehenden Ansprüche, wobei der Berichtsprozessor (11) konfiguriert ist, um die Dauer des Burst-Empfangszeitfensters auch in Abhängigkeit von dem Folgenden zu variieren: (a) mindestens einem von einem menschlichen Benutzer definierten Parameter; und/oder (b) mindestens ein Merkmal des Ortungssystems.

15. Ortungssystem nach Anspruch 14, wobei der mindestens eine von einem menschlichen Benutzer definierte Parameter ein Toleranzparameter ist, der von einem Benutzer des Ortungssystems eingegeben wird; und/oder wobei die mindestens eine Eigenschaft des Ortungssystems eine Latenzzeitverzögerung ist bei: der Signal- und/oder Berichtsübertragung; und/oder dem Signal- und/oder Berichtsempfang; und/oder der Signal- und/oder Berichtsverarbeitung; und/oder der Berechnung; und/oder wobei die mindestens eine Eigenschaft des Ortungssystems umfasst: eine bestimmte Ortungsgenauigkeitanforderung; und/oder eine aktuelle Verarbeitungs- und/oder Übertragungslast des Systems; und/oder eine bestimmte Systemdurchsatzanforderung; und/oder eine bestimmte Softwarelizenzanforderung.

## Revendications

1. Système de localisation pour localiser des dispositifs sans fil mobiles (1), comprenant : au moins un dispositif sans fil mobile (1) ; au moins un récepteur sans fil (3) configuré pour recevoir des transmissions sans fil (5) depuis le au moins un dispositif sans fil mobile (1) et pour transmettre des rafales de rapports de dispositif concernant les transmissions sans fil (5) à un processeur de rapports (11) ; et ledit processeur de rapports (11) configuré pour recevoir les rafales de rapports de dispositif en provenance du au moins un récepteur sans fil (3), chaque rafale de rapports de dispositif devant être reçue par le processeur de rapports (11) pendant une fenêtre temporelle de réception de rafales respective ; **caractérisé en ce que** le processeur de rapports (11) est configuré pour modifier la durée de la fenêtre temporelle de réception de rafales en cours d'utilisation, en fonction d'au moins : (i) une détermination d'un type de rafale de rapports de dispositif ; et/ou (ii) une durée mesurée d'une rafale précédente de rapports de dispositif.

2. Système de localisation selon la revendication 1, dans lequel le processeur de rapports (11) est configuré pour déterminer le type de rafale de rapports de dispositif après qu'au moins le premier rapport de dispositif d'une rafale ait été reçu.

3. Système de localisation selon la revendication 1 ou la revendication 2, dans lequel le processeur de rapports (11) est configuré pour déterminer le type de rafale de rapports de dispositif à partir d'un codage de données contenu dans au moins un rapport de dispositif de la rafale.

4. Système de localisation selon la revendication 3, dans lequel le codage de données contenu dans au moins un rapport de dispositif de la rafale fournit des informations concernant : la longueur de durée de rafale ; et/ou le nombre de répétitions dans la rafale ; et/ou le type et/ou la configuration du dispositif sans fil mobile (1) ; et/ou le type et/ou la configuration du récepteur sans fil (3).

5. Système de localisation selon l'une quelconque des revendications précédentes, dans lequel le type de rafale de rapports de dispositif peut être un type de rafale normal, ou un type de rafale long ou d'urgence.

6. Système de localisation selon l'une quelconque des revendications précédentes, dans lequel le processeur de rapports (11) est configuré pour mesurer ladite durée de ladite rafale précédente de rapports de dispositif.

7. Système de localisation selon l'une quelconque des revendications précédentes, dans lequel ladite durée mesurée de ladite rafale précédente de rapports de dispositif est la durée mesurée d'une rafale précédente de rapports de dispositif en provenance du même dispositif sans fil mobile (1).

8. Système de localisation selon l'une quelconque des revendications précédentes, dans lequel la rafale précédente de rapports de dispositif est la rafale immédiatement précédente de rapports de dispositif.

9. Système de localisation selon l'une quelconque des revendications précédentes, dans lequel la variation de la durée de la fenêtre temporelle de réception de rafale est une variation de la durée de la fenêtre temporelle de réception de rafale pour un dispositif sans fil mobile particulier (1).

10. Système de localisation selon l'une quelconque des revendications précédentes, dans lequel le processeur de rapports (11) est configuré pour modifier la durée de la fenêtre temporelle de réception de rafale en fonction de ladite durée mesurée d'une rafale précédente de rapports de dispositifs multipliée par un coefficient.

11. Système de localisation selon la revendication 10, dans lequel le processeur de rapports (11) est configuré pour sélectionner une valeur pour le coefficient parmi une pluralité de valeurs de coefficient prédéterminées.

12. Système de localisation selon la revendication 10 ou la revendication 11, dans lequel le processeur de rapports (11) est configuré pour sélectionner une valeur pour le coefficient en fonction du type déterminé de rafale de rapports de dispositif.

13. Système de localisation selon la revendication 12, dans lequel ledit coefficient pour un type d'urgence de rafale de rapports de dispositif est supérieur à un coefficient pour un type normal de rafale de rapports de dispositif.

14. Système de localisation selon l'une quelconque des revendications précédentes, dans lequel le processeur de rapports (11) est configuré pour modifier la durée de la fenêtre temporelle de réception de rafale, également en fonction : (a) d'au moins un paramètre défini par un utilisateur humain ; et/ou (b) d'au moins une caractéristique du système de localisation.

15. Système de localisation selon la revendication 14, dans lequel ledit au moins un paramètre défini par un utilisateur humain est un paramètre de tolérance entré par un utilisateur du système de localisation ; et/ou dans lequel ladite au moins une caractéristique du système de localisation comprend un retard de temps de latence dans : une transmission de signal et/ou de rapport; et/ou une réception de signal et/ou de rapport; et/ou un traitement de signal et/ou de rapport; et/ou un calcul ; et/ou dans lequel ladite au moins une caractéristique du système de localisation comprend : une exigence de précision de localisation spécifiée ; et/ou une charge de traitement et/ou de transmission actuelle du système ; et/ou une exigence de débit de système spécifiée ; et/ou une exigence de licence de logiciel spécifiée.
